# EUROPEAN PATENT SPECIFICATION

(11) **EP 0 984 179 B1**
(45) Date of publication and mention of the grant of the patent: **14.04.2004**
(21) Application number: 99306863.4
(22) Date of filing: 27.08.1999
(51) Int. Cl.: F16B 45/00

(54) **A fitting for a pole, particularly a tent pole**
Zubehörteil für einen Mast, insbesondere einen Zeltmast
Accessoire d'accrochage pour un mât, notamment un mât de tente

(30) Priority: 31.08.1998 FR 9810858
(43) Date of publication of application: 08.03.2000
(73) Proprietor: YKK Europe Limited, London EC1V 8AN (GB)
(72) Inventor: Murata, Koji, 59130 Lambersart (FR)
(74) Representative: Luckhurst, Anthony Henry William

(56) References cited:
- CA-A- 2 096 048
- GB-A- 1 328 600
- US-A- 4 176 480
- US-A- 5 046 222

## Description

The present invention relates to a tent pole for hanging a tent or tent inner from a tent frame.

Previously, the inner fabric of a tent has been hung from the frame by attaching hook or eye type fittings to the frame poles. The tent inner is provided with the complementary fastener part and is hung from the fittings. CA-A-2 096 048 shows such a fitting.

Problems arise using this conventional type of fastener. There is more than one commonly used tent pole diameter. As a result, conventional tent pole fittings are designed for a specific tent pole diameter, increasing the stock of fittings which must be carried.

The present invention provides a tent pole and a fitting, the fitting comprising a resilient arcuate gripping portion which partially encircles the pole, wherein a slot is provided in the gripping portion, the slot laying between radially inner and outer surfaces thereof and extending in the circumferential direction of the pole. The slot in the gripping portion enables the gripping portion to deform sufficiently to accommodate more than one diameter of pole.

Typically in its relaxed state the gripping portion has an internal radius to receive a first diameter pole, say 20 mm, the fitting gently gripping the pole, and the slot allows the fitting to be deformed to comfortably grip a larger diameter pole, say 23 mm.

Very preferably engaging means such as a hook or an eye are provided on the fitting.

The gripping portion preferably subtends an angle of at least 270 degrees in its relaxed state, and more preferably about 300 degrees. The circumferential ends of the gripping portion can be spread apart to urge the fitting onto a pole. The slot or slots provided in the gripping portion are elongate and preferably extend for at least ninety degrees of arc. Preferably, a slot extends progressively closer to the inner surface of the gripping portion as the hole extends circumferentially towards a free end of the gripping portion. Additionally or alternatively an inner wall of the slot is thinner at one axial end of the fitting than the other. This assists in maintaining the resilience of the gripping position.

Such fittings incorporate a hook or an eye for attaching a tent inner or the like. If hooks are attached to the frame pole, the tent inner must be provided with eyes and not hooks to firmly secure it, and vice versa. Two types of fastener must be produced to accommodate tents which use one of the two different types of fitting, hooks or eyes.

A hook and eye may be provided at the same end or at opposite circumferential ends of the gripping portion, which partially encircles the pole to hold the fitting on the pole.

In a preferred configuration of the tent pole, the fitting is in the shape of a crook, the arc of the crook forming the gripping portion, and the leg of the crook incorporates a hook and/or an eye.

In another preferred configuration, a hook fastener is located at one circumferential end of the gripping portion and an eye is located at an opposite end.

Preferably the hook and eye are each formed in a plane extending in the axial direction of a pole on which the fitting is to be mounted.

The present invention will now be described by way of example with reference to the accompanying drawings, in which :-
Figure 1 shows a side view of a first embodiment of the present invention;
Figure 2 shows a side view of a second embodiment of the present invention;
Figure 3 shows a front view of the fitting of Figure 2; and
Figure 4 shows an axial cross-section through the fitting along the line AA' of Figure 3.

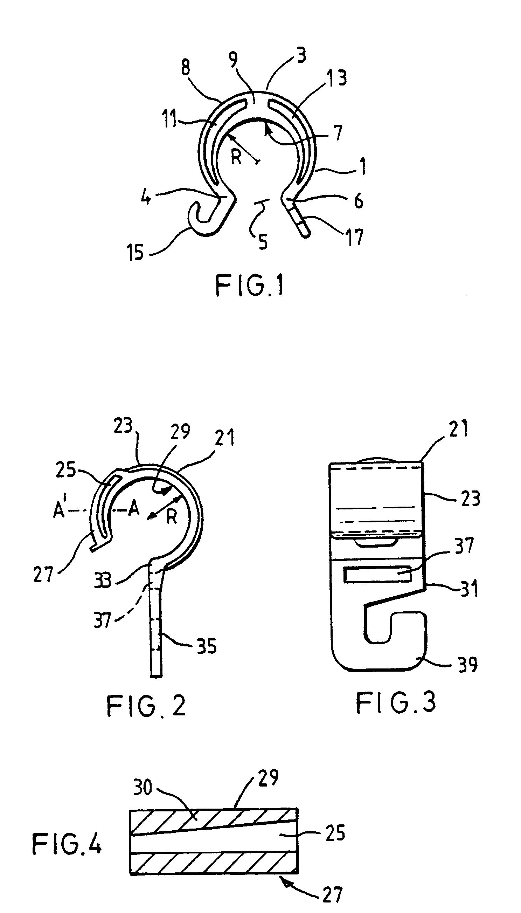

Figure 1 shows a fitting 1 for a tent pole. The fitting has a gripping portion 3 which has an inner surface 7 extending in an arc of radius R. The gripping portion subtends an angle of about 300 degrees, the circumferential ends 4, 6 of the gripping portion forming a gap 5. The fitting 1 fits over a tent pole (not shown). Depending on the resilience of the material and structure of the fitting, a pole can be urged radially into the fitting through the gap 5, or the ends 4, 6 can be urged apart slightly and the fitting slid axially onto the pole. The fitting is moulded from plastics material.

In the example shown, the radius R is 10 mm, and the fitting will sit comfortably around a tent pole of diameter 20 mm. The fitting is about 22 mm long in the axial direction, extending into the plane of the drawing.

To enable the fitting to accommodate a pole of larger diameter, in this example 23 mm, the gripping portion 3 has a pair of elongate slots 11, 13 which extend through the arcuate body 5 of the gripping portion 3 and lay between the radially inner surface 7 and the radially outer surface 8. The slots extend circumferentially. The slots are positioned such that they progressively extend towards the inner surface 7 as they extend towards the ends 4, 6.

The fastener 1, is shown in the unstressed state. When the gripping portion 3 is fitted on a 23 mm diameter tent pole, the inner surface 7 can deform to accommodate the larger pole so that the fitting sits comfortably on the pole. Without this, the fitting would tend to twist or leave a significant gap between the inner surface 7 and the pole.

The slots 11, 13 allow compression of the body 9 at the region of the inner surface 7, as well as making the body 9 less rigid.

A hook 15 is provided at one end 4 and an eye 17 is provided at the opposite end 6 of the gripping portion 3. Therefore, a tent inner or other item which has either eye fastener parts or hook type fastener parts can be hung off fitting 1. The hook 15 and eye 17 areformed in a plane parallel to the axial direction of the pole.

A second embodiment of the invention is shown in Figures 2 and 3. Figure 2 shows a side view of a fitting 21. The fitting 21 is in the shape of a crook and has a single slot 25 provided in the body 27 of a gripping portion 23.

The inner surface 29 has a radius R of 20 mm. The slot 25 allows for the inner surface 29 of the gripping portion 23 to be deformed (as explained for the fitting of Figure 1) to accommodate a pole of diameter 23 mm.

As seen in Figure 3, a single arm 31 depends from a circumferential end 33 of the gripping portion 23. The arm 31 has a combined hook and eye arrangement 37, 39. The hook and eye are formed in a plane extending parallel to the axial direction of the tent pole, the fitting being about 22 mm long in this axial direction.

Referring to Figure 4, which shows a cross-section in the axial direction through the body 27, the inner wall 30 of slot 25 is tapered so that it is thinner at one axial end of the fitting than the other. This assists in maintaining the resilience of the gripping position 3.

## Claims

1. A tent pole and a fitting, the fitting comprising a resilient arcuate gripping portion (3, 23) which partially encircles the pole, **characterised in that** a slot (11, 13, 25) is provided in the gripping portion (3, 23), the slot (11, 13, 25) laying between radially inner and outer surfaces (7, 8) of the gripping portion and extending in the circumferential direction.

2. A tent pole and fitting as claimed in claim 1, **characterised in that** a hook (15, 39) and/or an eye (17, 37) is provided on the fitting.

3. A tent pole and fitting as claimed in claim 2, **characterised in that** both a hook and an eye are provided.

4. A tent pole and fitting as claimed in claim 3, **characterised in that** the hook and eye are provided at opposite circumferential ends (4, 6) of the gripping portion (3).

5. A tent pole and fitting as claimed in claim 3, **characterised in that** both a hook and an eye (37, 39) are provided and are at the same circumferential end (33) of the gripping portion.

6. A tent pole and fitting as claimed in any one of claims 1 to 5, **characterised in that** the gripping portion (3, 23) subtends an angle of at least 270 degrees.

7. A tent pole and fitting as claimed in claim 6, **characterised in that** the gripping portion subtends an angle of about 300 degrees.

8. A tent pole and fitting as claimed in any one of claims 1 to 7, **characterised in that** the gripping portion (3, 23) has a radially inner surface having a radius of about 20 mm and the pole has a diameter 23 mm.

9. A tent pole and fitting as claimed in any one of claims 1 to 8, **characterised in that** the slot (11, 13, 25) extends closer to the radially inner surface (7, 29) of the gripping portion near the circumferential end (4, 6, 33) of the gripping portion.

## Patentansprüche

1. Zeltmast und Zubehörteil, wobei das Zubehörteil einen federnden, gebogenen Greifabschnitt (3, 23), umfasst, der den Mast teilweise umgreift, **dadurch gekennzeichnet, dass** im Greifabschnitt (3, 23) ein Schlitz (11, 13, 25) vorgesehen ist, wobei der Schlitz (11, 13, 25) zwischen der radial verlaufenden Innen- und Außenoberfläche (7, 8) des Greifabschnitts angeordnet ist und sich in Umfangsrichtung des Zeltmastes erstreckt.

2. Zeltmast und Zubehörteil nach Anspruch 1, **dadurch gekennzeichnet, dass** ein Haken (15, 39) und/oder eine Öse (17, 37) am Zubehörteil vorgesehen sind/ist.

3. Zeltmast und Zubehörteil nach Anspruch 2, **dadurch gekennzeichnet, dass** sowohl ein Haken als auch eine Öse vorgesehen sind.

4. Zeltmast und Zubehörteil nach Anspruch 3, **dadurch gekennzeichnet, dass** der Haken und die Öse an gegenüberliegenden Umfangsenden (4, 6) des Greifabschnitts (3) vorgesehen sind.

5. Zeltmast und Zubehörteil nach Anspruch 3, **dadurch gekennzeichnet, dass** sowohl ein Haken als auch eine Öse (37, 39) vorgesehen sind und dass diese am selben Umfangsende (33) des Greifabschnitts vorgesehen sind.

6. Zeltmast und Zubehörteil nach einem der Ansprüche 1 bis 5, **dadurch gekennzeichnet, dass** der Greifabschnitt (3, 23) einen Winkel von wenigstens 270° begrenzt.

7. Zeltmast und Zubehörteil nach Anspruch 6, **dadurch gekennzeichnet, dass** der Greifabschnitt einen Winkel von etwa 300° begrenzt.

8. Zeltmast und Zubehörteil nach einem der Ansprüche 1 bis 7, **dadurch gekennzeichnet, dass** der Greifabschnitt (3, 23) eine radiale Innenoberfläche mit einem Radius von etwa 20 mm aufweist und dass der Mast einen Durchmesser von 23 mm aufweist.

9. Zeltmast und Zubehörteil nach einem der Ansprüche 1 bis 8, **dadurch gekennzeichnet, dass** sich der Schlitz (11, 13, 25) in der Nähe des Umfangsendes (4, 6, 33) des Greifabschnitts näher an der radialen Innenoberfläche (7, 29) des Greifabschnitts erstreckt.

## Revendications

1. Mât de tente et accessoire, l'accessoire comprenant une partie d'accrochage courbe, élastique, (3, 23) qui entoure partiellement le mât, **caractérisé en ce qu'**une fente (11, 13, 25) est ménagée dans la partie d'accrochage (3, 23), la fente (11, 13, 25) étant située entre des surfaces (7, 8) radialement intérieure et extérieure de la partie d'accrochage, et s'étendant dans la direction circonférentielle.

2. Mât de tente et accessoire selon la revendication 1, **caractérisé en ce qu'**un crochet (15, 39) et/ou un oeillet (17, 37) est ménagé sur l'accessoire.

3. Mât de tente et accessoire selon la revendication 2, **caractérisé en ce qu'**à la fois un crochet et un oeillet sont ménagés.

4. Mât de tente et accessoire selon la revendication 3, **caractérisé en ce que** le crochet et l'oeillet sont ménagés sur des extrémités circonférentielles opposées (4, 6) de la partie d'accrochage (3).

5. Mât de tente et accessoire selon la revendication 3, **caractérisé en ce qu'**à la fois un crochet et un oeillet (37, 39) sont ménagés et se situent sur la même extrémité circonférentielle (33) de la partie d'accrochage.

6. Mât de tente et accessoire selon l'une quelconque des revendications 1 à 5, **caractérisé en ce que** la partie d'accrochage (3, 23) sous-tend un angle d'au moins 270 degrés.

7. Mât de tente et accessoire selon la revendication 6, **caractérisé en ce que** la partie d'accrochage sous-tend un angle d'environ 300 degrés.

8. Mât de tente et accessoire selon l'une quelconque des revendications 1 à 7, **caractérisé en ce que** la partie d'accrochage (3, 23) comporte une surface radialement intérieure ayant un rayon d'environ 20 mm et **en ce que** le mât a un diamètre de 23 mm.

9. Mât de tente et accessoire selon l'une quelconque des revendications 1 à 8, **caractérisé en ce que** la fente (11, 13, 25) s'étend plus près de la surface radialement intérieure (7, 29) de la partie d'accrochage, à proximité de l'extrémité circonférentielle de la partie d'accrochage.
